# EUROPÄISCHE PATENTSCHRIFT

(11) **EP 0 814 293 B1**
(45) Veröffentlichungstag und Bekanntmachung des Hinweises auf die Patenterteilung: **21.08.2002**
(21) Anmeldenummer: 97110058.1
(22) Anmeldetag: 19.06.1997
(51) Int. Cl.: F16L 37/34, F16L 29/04

(54) **Kupplungsteil einer Druckmittel-Steckkupplung**
A coupling piece for coupling for fluid under pressure
Pièce d'accouplement pour accouplement pour fluide sous pression

(30) Priorität: 19.06.1996 DE 19624365
(43) Veröffentlichungstag der Anmeldung: 29.12.1997
(73) Patentinhaber: Voswinkel GmbH, 58540 Meinerzhagen (DE)
(72) Erfinder: Weiland, Fritz Georg, Dipl.-Ing., 58540 Meinerzhagen (DE); Hartmann, Jürgen, Dipl.-Ing., 58339 Breckerfeld (DE)
(74) Vertreter: Patentanwälte Dr. Solf & Zapf

(56) Entgegenhaltungen:
- WO-A-95/33158
- WO-A-96/21120
- DE-A- 3 800 109
- GB-A- 898 955
- US-A- 2 958 544

## Beschreibung

Die vorliegende Erfindung betrifft ein Kupplungsteil einer aus zwei zusammensteckbaren und sich dabei gegenseitig öffnende Ventile aufweisenden Kupplungsteilen bestehenden Druckmittel-Steckkupplung, insbesondere drucknehmerseitiges, in ein druckgeberseitiges Muffenventil einsteckbares Steckerventil, mit einem in einem Ventilgehäuse derart entsprechend der Steckrichtung axialbeweglich geführten Ventilkörper, daß dieser beim Kuppelvorgang durch Anlage am anderen Kupplungsteil selbsttätig in eine Öffnungsstellung gebracht wird, wobei der Ventilkörper innerhalb des Ventilgehäuses derart gegen eine Druckmittel-Beaufschlagung geschützt angeordnet ist, daß er im geschlossenen Zustand frei von druckbedingten, in axialer Richtung wirkenden Kräften gelagert ist, wobei der Ventilkörper mit einem sich axial in zur Steckrichtung entgegengesetzter Richtung erstreckenden Ventilschaft umfangsgemäß abgedichtet innerhalb eines Abschirmelementes geführt und der Raum innerhalb des Abschirmelementes stets im wesentlichen drucklos ist.

Der Begriff "Nehmerseite" bezeichnet die Seite eines Druckmittel-Verbrauchers bzw. - Aggregates, und der Begriff "Geberseite" bedeutet die Seite einer den Druck des Druckmittels, insbesondere Hydraulikmediums, aufbauenden Pumpe.

Bekannte Hydraulik-Kupplungen, beispielsweise genormte Ausführungen gemäß ISO 5675 i.V.m. ISO 7241-1 und -2 sowie SAE J 1036, bestehen aus einem Steckerventil und einem Muffenventil, wobei üblicherweise das Steckerventil nehmerseitig (aggregatseitig) und das Muffenventil geberseitig (pumpenseitig) angeordnet werden. In der üblichen Schnellverschlußausführung wird das Steckerventil in seiner umfänglich abgedichtet in das Muffenventil eingesteckten Kupplungslage über eine insbesondere als Kugelarretierung ausgebildete Verriegelungseinrichtung lösbar verriegelt. In dieser Kupplungslage öffnen die Ventile durch direkten stirnseitigen Kontakt der entsprechenden Ventilkörper von Stecker- und Muffenventil. Dies bedeutet, daß beim Einstecken des Steckerventils in das Muffenventil sowohl der Muffen-Ventilkörper als auch der Stecker-Ventilkörper "aufgedrückt" werden müssen. Dies ist jedoch manuell nur dann möglich, wenn beide Seiten im wesentlichen drucklos sind. Oft ist aber nehmerseitig ein Restdruck vorhanden, der beispielsweise durch einen mit einer statischen Last belasteten Hydraulikzylinder oder durch einen bei Temperaturanstieg auftretenden Druckanstieg derart hoch sein kann (bis zu 100 bar und mehr), daß ein Öffnen des Steckerventils gegen die sehr hohe, den Ventilkörper beaufschlagende, hydraulisch bedingte Schließkraft manuell nicht mehr möglich ist.

Aus diesem Grund sind auch sogenannte "unter Druck kuppelbare" Muffenventile (UDK-Muffen) bekannt, beispielsweise aus der DE-OS 35 09 371, deren Ventilkörper gegenüber dem Stecker-Ventilkörper um den doppelten Ventilhub beweglich sind, so daß das Steckerventil beim Kuppeln zunächst geschlossen bleiben kann. Ein Öffnen erfolgt dann erst durch geberseitigen Druckaufbau, und zwar wenn der geberseitige Druck etwa dem nehmerseitigen Restdruck entspricht. Derartige UDK-Muffenventile sind aber konstruktiv sehr aufwendig und damit teuer, zumal zusätzliche Sperrmittel erforderlich sind, die im Betriebszustand mechanisch oder hydraulisch den doppelten Ventilhub auf den einfachen Hub begrenzen, damit die Kupplung bei einer Hydraulik-Rückströmung nicht ungewollt schließen kann. Die höheren Kosten für die UDK-Muffenventile machen sich insbesondere deshalb so gravierend bemerkbar, da es sich bei den betreffenden Hydraulik-Kupplungen um Massenartikel handelt, die in sehr großen Stückzahlen bei hydraulischen Anlagen und Aggregaten aller Art, wie z.B. bei Land- und Baumaschinen, eingesetzt werden.

Die DE - A - 38 00 109 beschreibt ein Kupplungsteil der eingangs beschriebenen Art entsprechend dem Oberbegriff des Anspruchs 1. Es handelt sich um ein Kupplungsteil eines Verbindungssystems, wobei ein verschiebbar gelagerter Ventilkörper mit seinem Ventilschaft umfangsgemäß abgedichtet innerhalb eines rohrförmigen Mittelteils eines Ventilträgers geführt ist. Hierdurch wird ein Volumen abgeteilt, welches beispielsweise mit der Außenatmosphäre verbunden sein kann. Der Druck innerhalb des Innenraums kann dadurch im wesentlichen unabhängig von der Höhe des Druckmitteldrucks gemacht werden, wodurch die Öffnungsbewegung mit vergleichsweise kleinen Öffnungskräften auch bei vergleichsweise hohem Innendruck erfolgen kann. Bei der bekannten Ausführung ist aber von Nachteil, dass beim Einstecken der Kupplungsverbindung das eigentliche Ventil sofort zwangsweise geöffnet wird, so dass bei hohem anstehendem Druck die Hauptdichtung gegen strömungsbedingtes Auswaschen gefährdet ist.

Der vorliegenden Erfindung liegt die Aufgabe zugrunde, ein Kupplungsteil der genannten Art zu schaffen, mit dem einerseits ein einfaches manuelles Kuppeln unter nehmerseitigem Restdruck möglich ist, andererseits aber auch eine gute Robustheit (Störungsunanfälligkeit) gewährleistet ist.

Erfindungsgemäß wird dies durch die kennzeichnenden Merkmale des Anspruchs 1 erreicht. Dabei ist hervorzuheben, dass der erfindungsgemäße Zwischenkolben aufgrund seiner Dichtwirkung mit dem Ventilgehäuse ein zusätzliches, dem eigentlichen, durch den Ventilkörper gebildeten Ventil vorgeordnetes Verschlußelement bildet. Dadurch ist es möglich, den Strömungsweg durch den Zwischenkolben erst dann zu öffnen, wenn die Haupt-Umfangsdichtung bereits in den Bereich einer Ventilhülse des Muffenventils gelangt und hierdurch gekammert und gegen strömungsbedingtes Auswaschen geschützt ist. Zudem tritt durch den erfindungsgemäßen Zwischenkolben der außerordentlich wichtige zusätzliche Vorteil auf, dass eine Reduzierung bzw. ein Abbau des nehmerseitigen Restdruckes beim Kuppeln erreicht wird. Hierdurch wird in der Folge eine vorteilhaft geringe Öffnungsströmung erreicht, was auch zu einer Schutzwirkung gegen Erosionserscheinungen führt. Zusammenfassend wird durch die erfindungsgemäßen Merkmale eine erhöhte Störungsunanfälligkeit erreicht.

Der Ventilkörper ist innerhalb des Ventilgehäuses derart gegen eine Druckmittel-Beaufschlagung geschützt angeordnet, daß er im geschlossenen Zustand frei von druckbedingten, in axialer Richtung wirkenden Kräften gelagert ist Dies bedeutet, daß der innere Druck keinerlei solche Flächen des Ventilkörpers beaufschlagen kann, daß hierdurch axiale Kräfte entstehen könnten. Insbesondere wird die Entstehung einer in Schließrichtung wirkenden Schließkraft vermieden. Daher braucht vorteilhafterweise beim Kuppeln in der ersten Phase nur eine den Ventilkörper beaufschlagende Federkraft einer Rückstellfeder überwunden zu werden, so daß ein Kuppeln unter nehmerseitigem Restdruck auch manuell auf einfache Weise möglich ist, ohne daß hierfür eine spezielle UDK-Muffe erforderlich wäre. Es kann eine konstruktiv einfache Muffe mit einfachem Ventilhub eingesetzt werden. Trotz nehmerseitigem Restdruck öffnet beim Kuppelvorgang auch der nehmerseitige Ventilkörper.

Durch die Erfindung ist es mit konstruktiv und herstellungsmäßig besonders einfachen und robusten Mitteln möglich geworden, die Steckkupplung zu kuppeln, auch wenn nehmerseitig ein Restdruck von bis zu 100 bar vorhanden ist, unter der Voraussetzung, daß die Geberseite druckentlastet ist (System ist geberseitig offen).

Zweckmäßigerweise steht der Raum innerhalb des Abschirmelementes über mindestens eine Gehäuse-Lüftungsöffnung mit der Atmosphäre in Verbindung. Durch diese Maßnahme wird erreicht, dass die hintere axiale Fläche des Ventilkörpers bzw. des Ventilschaftes nicht von dem Restdruck beaufschlagt werden kann.

Auch im Bereich des erfindungsgemäßen Zwischenkolbens werden druckbedingte axiale Kräfte vollständig vermieden, so daß vorteilhafterweise alle beim Kuppelvorgang sich bewegenden Teile vor einer axialen Beaufschlagung mit dem nehmerseitigen Restdruck geschützt werden.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll im folgenden die Erfindung näher erläutert werden. Bei dem beschriebenen Ausführungsbeispiel handelt es sich um ein geberseitiges Muffenventil und ein nehmerseitiges, erfindungsgemäßes Steckerventil, jedoch liegt es durchaus im Rahmen der Erfindung, dies auch umgekehrt vorsehen zu können, d.h. das Muffenventil in einer erfindungsgegemäßen Ausgestaltung nehmerseitig und das Steckerventil in einer herkömmlichen Ausführung geberseitig anzuordnen. Hierbei sind zudem auch feste Einbaulagen der Kupplungsteile, z.B. in Fahrzeugwänden, möglich. In schematischen Längsschnittdarstellungen zeigen:
- Fig. 1: die beiden Kupplungsteile einer Steckkupplung, in lagerichtiger Zuordnung zueinander vor dem Kuppeln bzw. nach dem Entkuppeln,
- Fig. 2: die Steckkupplung gemäß Fig. 1 in einer Zwischenstellung während des Kuppelns bzw. Entkuppelns, in der beide Ventile noch bzw. wieder geschlossen und die Kupplungsteile noch nicht verriegelt bzw. wieder entriegelt sind,
- Fig. 3: die Steckkupplung gemäß Fig. 1 und 2 in eingesteckter und verriegelter Kupplungslage des Steckerventils mit jeweils geöffneten Ventilen und
- Fig. 4: einen Querschnitt in der Schnittebene IV-IV gemäß Fig. 1 bis 3.

In den verschiedenen Zeichnungsfiguren sind gleiche Teile stets mit denselben Bezugszeichen versehen und werden daher in der Regel auch jeweils nur einmal beschrieben.

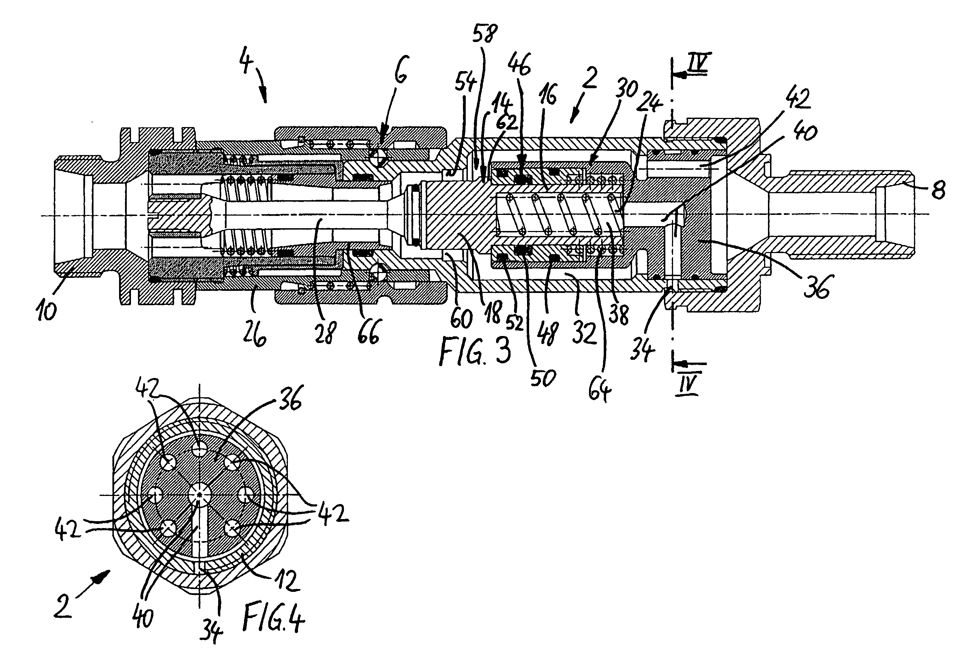

Die in der Zeichnung dargestellte Druckmittel-Steckkupplung, insbesondere Hydraulik-Kupplung, ist als Schnellverschlußkupplung mit an sich bekannter Kugelarretierung ausgebildet und besteht aus einem Steckerventil 2 und einem Muffenventil 4. Üblicherweise werden das Steckerventil 2 auf der Seite eines Verbrauchers bzw. Aggregates (Nehmerseite) und das Muffenventil 4 auf der Seite einer Druckmittelpumpe (Geberseite) angeordnet. Das Steckerventil 2 ist bereichsweise in eine Einstecköffnung des Muffenventils 4 einsteckbar und in der in Fig. 3 dargestellten Kupplungslage beispielsweise durch eine Sperrkugel-Verriegelungseinrichtung 6 verriegelt. Die Einzelheiten dieser Verriegelung sind Stand der Technik und bedürfen daher keiner weiteren Erläuterung.

Jedes Kupplungsteil 2 bzw. 4 weist auf seiner der dem anderen Kupplungsteil 4 bzw. 2 zugekehrten Verbindungsseite axial gegenüberliegenden Seite einen Druckmittelanschluß 8 bzw. 10 für eine nicht dargestellte Druckleitung auf.

Das erfindungsgemäße Kupplungsteil, wie dargestellt bevorzugt das Steckerventil 2, besteht aus einem Ventilgehäuse 12, in dem ein als Ventilstößel ausgebildeter Ventilkörper 14 entsprechend der Steckrichtung axialbeweglich geführt ist. Dieser Ventilkörper 14 besteht aus einem im wesentlichen zylindrischen Ventilschaft 16 und einem dem Muffenventil 4 zugekehrten Ventilkopf 18. Der Ventilkopf 18 ist bevorzugt ebenfalls im wesentlichen zylindrisch ausgebildet und wirkt über eine Umfangsdichtung 20, die bevorzugt als Radialdichtring ausgebildet ist, zur Bildung eines Ventils mit einem Dichtbereich 22 des Ventilgehäuses 12 zusammen. Die Umfangsdichtung 20 ist vorzugsweise innerhalb einer inneren Ringnut im Dichtbereich 22 des Ventilgehäuses 12 angeordnet. Der Ventilkörper 14 ist durch eine Rückstellfeder 24 mit einer Schließkraft beaufschlagt.

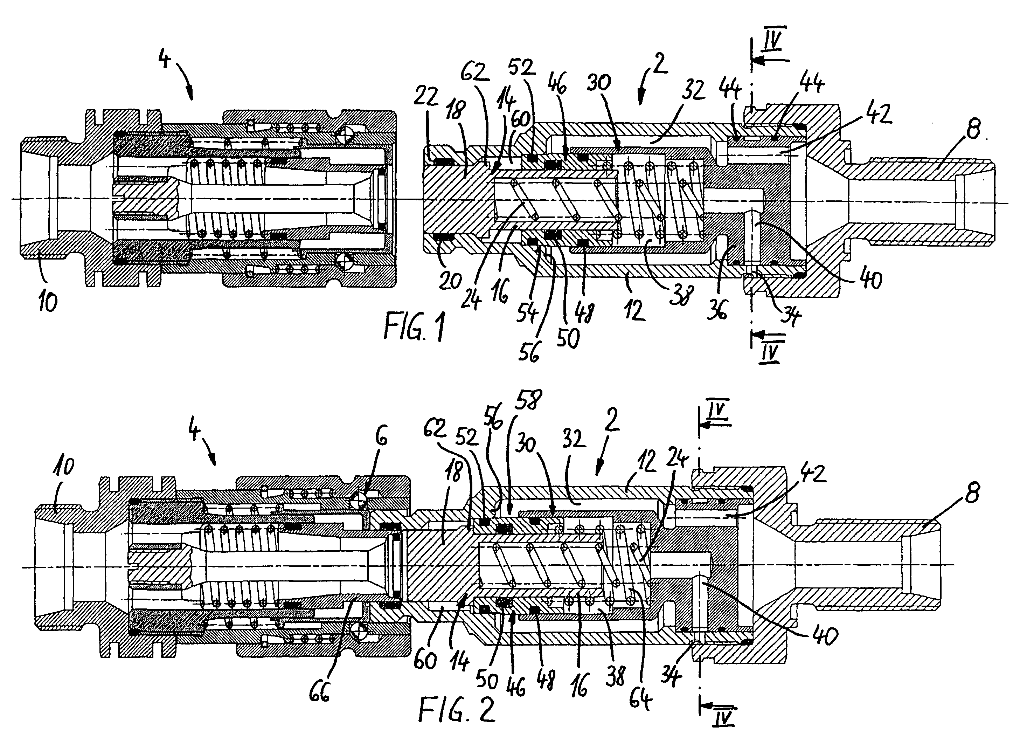

Da sich die vorliegende Erfindung ausschließlich auf das nehmerseitige Kupplungsteil, d.h. bevorzugt auf das Stekkerventil 2, bezieht, ist die Ausgestaltung des Muffenventils 4 eigentlich beliebig. Dies bedeutet, daß eine herkömmliche Norm-Muffe verwendet werden kann. Diesbezüglich sei an dieser Stelle lediglich erwähnt, daß das Muffenventil 4 innerhalb eines Ventilgehäuses 26 einen feststehenden Gegenstößel 28 aufweist. Durch stirnseitige Anlage des Ventilkörpers 14 des Steckerventils 2 an diesem Gegenstößel 28 des Muffenventils 4 wird der Stecker-Ventilkörper 14 beim Kuppelvorgang selbsttätig in seine Öffnungsstellung bewegt. Dies läßt sich anhand der Figuren 1 bis 3 leicht nachvollziehen.

Durch die vorliegende Erfindung wird nun dieser Kuppelvorgang auch dann ermöglicht, wenn das Steckerventil 2 mit einem nehmerseitigen Restdruck von bis zu mindestens 100 bar beaufschlagt ist, und zwar auch unter Verwendung eines "einfachen" Muffenventils 4. Es ist hierzu vorgesehen, daß der Ventilkörper 14 innerhalb des Ventilgehäuses 12 derart gegen eine Druckmittel-Beaufschlagung geschützt angeordnet ist, daß im geschlossenen Zustand (s. Fig.1 und 2) eine druckbedingte Entstehung von den Ventilkörper 14 in axialer Richtung beaufschlagenden Kräften, insbesondere die Entstehung einer druckbedingten Schließkraft, vermieden wird. Hierzu ist zunächst der Ventilkörper 14 mit seinem Ventilschaft 16 umfangsgemäß abgedichtet innerhalb eines Abschirmelementes 30 geführt. Dieses Abschirmelement 30 ist zweckmäßigerweise hülsenförmig ausgebildet und umschließt den Ventilschaft 16 koaxial. Das hülsenförmige Abschirmelement 30 erstreckt sich dabei innerhalb des Ventilgehäuses 12 axial und besitzt einen Durchmesser derart, daß zwischen dem Abschirmelement 30 und der Innenfläche des Ventilgehäuses 12 ein Ringspalt 32 verbleibt, der einen Teil eines Strömungsweges für das Druckmittel bildet. Hierbei ist es nun wesentlich, daß der Raum innerhalb des Abschirmelementes 30 stets im wesentlichen drucklos ist, wozu bevorzugt dieser Raum über mindestens eine Gehäuse-Lüftungsöffnung 34 mit der Atmosphäre verbunden ist. Durch diese Belüftung ("Zwangsbelüftung") liegt hier stets lediglich Atmosphärendruck vor, so daß der Ventilschaft 16 auf seiner rückwärtigen Stirnfläche nicht durch den Restdruck des Druckmittels beaufschlagt werden kann.

Wie dargestellt, weist das hülsenförmige Abschirmelement 30 an seinem rückwärtigen, dem Ventilkörper 14 abgekehrten Ende ein Basisteil 36 auf, über das das Abschirmelement 30 im Ventilgehäuse 12 ortsfest abgestützt ist. Dieses Basisteil 36 ist bevorzugt im wesentlichen zylindrisch ausgebildet, entsprechend dem Innenquerschnitt des Ventilgehäuses 12. Dabei besitzt das Basisteil 36 mindestens eine den Raum 38 innerhalb des Abschirmelementes 30 mit der Gehäuse-Lüftungsöffnung 34 verbindende Durchgangsöffnung 40, sowie ferner mindestens eine axiale und vorzugsweise exzentrisch angeordnete Strömungsöffnung 42 für das Druckmittel. Gemäß Fig. 1 bis 3 besteht die Durchgangsöffnung 40 aus einem axialen und einem radialen Abschnitt. Wie sich aus dem in Fig. 4 dargestellten Querschnitt ergibt, sind mehrere, wie dargestellt bevorzugt sieben, axiale Strömungsöffnungen 42 vorgesehen, die über den Umfang verteilt angeordnet sind. Der radiale Abschnitt der Durchgangsöffnung 40 erstreckt sich dabei im Bereich zwischen zwei Strömungsöffnungen 42 nach außen. In axialer Richtung beidseitig des Bereichs der Durchgangsöffnung 40 ist das Basisteil 36 druckdicht über Umfangsdichtungen 44 gegen das Ventilgehäuse 12 abgedichtet. Hierdurch wird ein Entweichen des Druckmittels über die Lüftungsöffnung 34 vermieden. Der einen Teil des Strömungsweges bildende Ringspalt 32 zwischen dem hülsenförmigen Abschirmelement 30 und dem Ventilgehäuse 12 ist über die Strömungsöffnung(en) 42 des Basisteils 36 mit dem Druckmittelanschluß 8 des Ventilgehäuses 12 verbunden.

In der Ausführungsform der Erfindung ist der Ventilkörper 14 mit seinem Ventilschaft 16 mittelbar über einen axialbeweglich geführten, ringförmigen Zwischenkolben 46 in dem Abschirmelement 30 geführt. Dieser Zwischenkolben 46 ist über eine erste Umfangsdichtung 48 gegen die Innenwandung des Abschirmelementes 30 sowie über eine zweite Umfangsdichtung 50 gegen den Ventilschaft 16 abgedichtet. Hierbei wirkt der Zwischenkolben 46 über eine dritte Umfangsdichtung 52 derart dichtend mit dem Ventilgehäuse 12 zusammen, daß er im Bereich zwischen dem Druckmittelanschluß 8 und dem eigentlichen, von dem Ventilkörper 14 bzw. dessen Ventilkopf 18 und dem Gehäuse-Dichtbereich 22 gebildeten Ventil ein zusätzliches Verschlußelement innerhalb des Druckmittel-Strömungsweges bildet. Zweckmäßigerweise ist die dritte Umfangsdichtung 52 als Radialdichtung ausgebildet, über die der Zwischenkolben 46 mit einer im wesentlichen zylindrischen Dichtfläche 54 des Ventilgehäuses 12 zusammenwirkt. Der Zwischenkolben 46 weist vorzugsweise über seine gesamte Länge hinweg einen im wesentlichen konstanten Außendurchmesser auf, so daß die mit der dritten Umfangsdichtung 52 zusammenwirkende Dichtfläche 54 (s. insbesondere Fig. 3) des Ventilgehäuses 12 einerseits sowie die mit der ersten Umfangsdichtung 48 zusammenwirkende Innenfläche des Abschirmelementes 30 andererseits im wesentlichen den gleichen Innendurchmesser aufweisen. Auf diese Weise ist axial zwischen dem ringförmigen Stirnende des Abschirmelementes 30 und einer inneren, den Innendurchmesser zwischen dem einen Teil des Strömungsweges bildenden Ringspalt 32 und der Dichtfläche 54 reduzierenden Gehäusestufe 56 eine radiale Strömungsöffnung 58 in Form eines radialen Ringspaltes gebildet; diese Strömungsöffnung 58 ist nun vorteilhafterweise durch den Zwischenkolben 46 schieberartig verschließbar. Im geschlossenen Zustand des Zwischenkolbens 46 (Fig. 1 und 2) wird dieser im Bereich seiner vorteilhafterweise zylindrischen, frei von radialen Stufen ausgebildeten Außenumfangsfläche ausschließlich radial mit Druck beaufschlagt, so daß auch in diesem Bereich keine druckbedingten Axialkräfte entstehen können.

Die radiale Ringspalt-Strömungsöffnung 58 geht in einen axialen Ringkanal 60 über, der seinerseits durch den Ventilkörper 14 verschließbar ist. Der Ventilkörper 14 bzw. der Ventilschaft 16 weist einen Mitnehmer 62 derart auf, daß er bei seiner Öffnungsbewegung ab einer bestimmten Zwischenstellung - siehe Fig. 2 - den Zwischenkolben 46 gegen die Kraft einer Schließfeder 64 in dessen Öffnungsstellung (Fig. 3) mitnimmt. Hierbei ist es besonders vorteilhaft, wenn der Zwischenkolben 46 die radiale Strömungsöffnung 58 erst dann öffnet, wenn die Haupt-Umfangsdichtung 20 bereits in den Bereich einer Ventilhülse 66 des Muffenventils gelangt und hierdurch gekammert und gegen strömungsbedingtes "Auswaschen" geschützt ist.

Aufgrund der beschriebenen Verschiebung des Zwischenkolbens 46 beim Kuppelvorgang tritt der außerordentlich wichtige Vorteil auf, daß hierdurch auch eine Reduzierung bzw. ein Abbau des nehmerseitigen Restdruckes erreicht wird. Denn bei Verschiebung des Zwischenkolbens 46 vergrößert sich das Volumen des axialen Ringkanals 60; dieses Volumen des Ringkanals 60 dient im Öffnungsmoment des Zwischenkolbens als Aufnahmekammer zur Aufnahme von Druckmittel, wodurch vorteilhafterweise der vorher vorhandene Restdruck sehr schnell reduziert wird, und zwar insbesondere im Falle eines Hydraulikmediums, bevor das eigentliche, durch den Ventilkörper 14 gebildete Ventil selbst ganz öffnet. Diese Maßnahme führt zu einer vorteilhaft geringen Öffnungsströmung und damit zum Schutz gegen Erosionserscheinungen.

Um zu gewährleisten, daß sich beim Kuppelvorgang zunächst nur der Ventilkörper 14 verschiebt, d.h. zunächst noch ohne Mitnahme des Zwischenkolbens 46, ist vorgesehen, daß die Rückstellfeder 24 des Ventilkörpers 14 eine geringere Federkraft aufweist als die Schließfeder 64 des Zwischenkolbens 46. Hierbei sind natürlich auch die Reibungskräfte zwischen dem Zwischenkolben 46 und dem Ventilkörper 14 entsprechend zu berücksichtigen.

## Patentansprüche

1. Kupplungsteil (2) einer aus zwei zusammensteckbaren und sich dabei gegenseitig öffnende Ventile aufweisenden Kupplungsteilen (2,4) bestehenden Druckmittel-Steckkupplung, insbesondere drucknehmerseitiges, in ein druckgeberseitiges Muffenventil (4) einsteckbares Steckerventil (2), mit einem in einem Ventilgehäuse (12) derart entsprechend der Steckrichtung axialbeweglich geführten Ventilkörper (14), daß dieser beim Kuppelvorgang durch Anlage am anderen Kupplungsteil (4) selbsttätig in eine Öffnungsstellung gebracht wird, wobei der Ventilkörper (14) innerhalb des Ventilgehäuses (12) derart gegen eine Druckmittel-Beaufschlagung geschützt angeordnet ist, daß er im geschlossenen Zustand frei von druckbedingten, in axialer Richtung wirkenden Kräften gelagert ist, wobei der Ventilkörper (14) mit einem sich axial in zur Steckrichtung entgegengesetzter Richtung erstreckenden Ventilschaft (16) umfangsgemäß abgedichtet innerhalb eines Abschirmelementes (30) geführt und der Raum innerhalb des Abschirmelementes stets im wesentlichen drucklos ist,
**dadurch gekennzeichnet, daß** der Ventilkörper (14) mit seinem Ventilschaft (16) mittelbar über einen axialbeweglich geführten, ringförmigen Zwischenkolben (46) in dem Abschirmelement (30) geführt ist, wobei der Zwischenkolben (46) über eine erste Umfangsdichtung (48) gegen das Abschirmelement (30) und über eine zweite Umfangsdichtung (50) gegen den Ventilschaft (16) abgedichtet ist, sowie über eine dritte Umfangsdichtung (52) derart dichtend mit dem Ventilgehäuse (12) zusammenwirkt, daß er ein zusätzliches Verschlußelement für den Druckmittel-Strömungsweg bildet.

2. Kupplungsteil nach Anspruch 1,
**dadurch gekennzeichnet, daß** der Raum innerhalb des Abschirmelementes (30) über mindestens eine Gehäuse-Lüftungsöffnung (34) mit der Atmosphäre verbunden ist.

3. Kupplungsteil nach Anspruch 1 oder 2,
**dadurch gekennzeichnet, daß** das hülsenförmige und den Ventilschaft (16) koaxial umschließende Abschirmelement (30) innerhalb des Ventilgehäuses (12) über ein Basisteil (36) ortsfest abgestützt ist, wobei das Basisteil (30) mindestens eine den Raum (38) innerhalb des Abschirmelementes (30) mit der Gehäuse-Lüftungsöffnung (34) verbindende Durchgangsöffnung (40) sowie mindestens eine Strömungsöffnung (42) für das Druckmittel aufweist.

4. Kupplungsteil nach Anspruch 3,
**dadurch gekennzeichnet, daß** ein zwischen dem Abschirmelement (30) und dem Ventilgehäuse (12) gebildeter Ringspalt (32) einen Strömungsweg für das Druckmittel bildet, wobei der Ringspalt (32) über die mindestens eine Strömungsöffnung (42) des Basisteils (36) mit einem Druckmittelanschluß (8) verbunden ist.

5. Kupplungsteil nach einem der Ansprüche 1 bis 4,
**dadurch gekennzeichnet, daß** die dritte Umfangsdichtung (52) als Radialdichtung ausgebildet ist, über die der Zwischenkolben (46) mit einer im wesentlichen zylindrischen Dichtfläche (54) des Ventilgehäuses (12) zusammenwirkt.

6. Kupplungsteil nach einem der Ansprüche 1 bis 4,
**dadurch gekennzeichnet, daß** der Zwischenkolben (46) vorzugsweise über seine gesamte Länge hinweg einen im wesentlichen konstanten Außenquerschnitt aufweist, so daß die mit der dritten Umfangsdichtung (52) zusammenwirkende Dichtfläche (54) des Ventilgehäuses (12) einerseits und die mit der ersten Umfangsdichtung (48) zusammenwirkende Innenfläche des Abschirmelementes (30) andererseits im wesentlichen den gleichen Innenquerschnitt aufweisen.

7. Kupplungsteil nach Anspruch 5 oder 6,
**dadurch gekennzeichnet, daß** axial zwischen einem ringförmigen Stirnende des Abschirmelementes (30) und einer inneren, den Innenquerschnitt zwischen dem den Strömungsweg bildenden Ringspalt (32) und der Dichtfläche (54) reduzierenden Gehäusestufe (56) eine radiale Strömungsöffnung (58) gebildet ist, die durch den Zwischenkolben (46) schieberartig verschließbar ist.

8. Kupplungsteil nach Anspruch 7,
**dadurch gekennzeichnet, daß** die radiale Strömungsöffnung (58) in einen axialen Ringkanal (60) übergeht, der seinerseits durch den mit einem Ventildichtbereich (22) des Ventilgehäuses (12) zusammenwirkenden Ventilkörper (14) verschließbar ist.

9. Kupplungsteil nach einem oder mehreren der Ansprüche 1 bis 8,
**dadurch gekennzeichnet, daß** der Ventilkörper (14) eine stirnseitige Anlagefläche derart aufweist, daß er durch die beim Kuppeln auftretende Steckbewegung und durch stirnseitige Anlage an einem Gegenstößel (28) des anderen Kupplungsteils (4) relativ zu dem Ventildichtbereich (22) des Ventilgehäuses (12) gegen die Kraft einer Rückstellfeder (24) in eine Öffnungsstellung verschoben wird.

10. Kupplungsteil nach Anspruch 9,
**dadurch gekennzeichnet, daß** der Ventilkörper (14) bzw. der Ventilschaft (16) einen Mitnehmer (62) derart aufweist, daß er bei seiner Öffnungsbewegung ab einer bestimmten Zwischenstellung den Zwischenkolben (46) gegen die Kraft einer Schließfeder (64) in dessen Öffnungsstellung mitnimmt.

## Claims

1. Coupling part (2) of a pressure-medium plug-in coupling, which comprises two coupling parts (2, 4) which can be plugged together and have oppositely opening valves, in particular a plug-in valve (2) which is on the pressure consumer side and can be plugged into a socket valve (4) on the pressure delivery side, having a valve body (14) which is guided in an axially movable manner, in accordance with the plug-in direction, in a valve housing (12), in such a manner that this body, during the coupling operation, by contact with the other coupling part (4) is automatically moved into an open position, the valve body (14) being arranged inside the valve housing (12) so that it is protected against exposure to pressure medium, in such a manner that, in the closed state, it is mounted free of pressure-related forces acting in the axial direction, the valve body (14) being guided inside a shielding element (30) in such a manner that it is circumferentially sealed by a valve stem (16) which extends axially in the opposite direction to the plug-in direction, and the space inside the shielding element always being substantially unpressurized, **characterized in that** the valve body (14) with its valve stem (16) being guided indirectly, via an annular intermediate piston (46) which is guided in an axially movable manner, within the shielding element (30), the intermediate piston (46) being sealed with respect to the shielding element (30) by means of a first circumferential seal (48) and being sealed with respect to the valve stem (16) by means of a second circumferential seal (50), and interacting, in a sealed manner, with the valve housing (12) via a third circumferential seal (52) in such a manner that it forms an additional closure element for the pressure-medium flow path.

2. Coupling part according to Claim 1, **characterized in that** the space inside the shielding element (30) is connected to atmosphere via at least one housing vent opening (34).

3. Coupling part according to Claim 1 or 2, **characterized in that** the shielding element (30), which is in the form of a sleeve and coaxially surrounds the valve stem (16), is supported in a fixed position inside the valve housing (12) via a base part (36), the base part (30) having at least one through-opening (40), which connects the space (38) inside the shielding element (30) to the housing vent opening (34), and at least one flow opening (42) for the pressure medium.

4. Coupling part according to Claim 3, **characterized in that** an annular gap (32), which is formed between the shielding element (30) and the valve housing (12), forms a flow path for the pressure medium, the annular gap (32) being connected to a pressure-medium port (8) via the at least one flow opening (42) in the base part (36).

5. Coupling part according to one of Claims 1 to 4, **characterized in that** the third circumferential seal (52) is designed as a radial seal, via which the intermediate piston (46) interacts with a substantially cylindrical sealing surface (54) of the valve housing (12).

6. Coupling part according to one of Claims 1 to 4, **characterized in that** the intermediate piston (46) has a substantially constant external cross section preferably over its entire length, so that the sealing surface (54) of the valve housing (12), which interacts with the third circumferential seal (52), on the one hand, and the inner surface of the shielding element (30), which interacts with the first circumferential seal (48), on the other hand, have substantially the same internal cross section.

7. Coupling part according to Claim 5 or 6, **characterized in that** a radial flow opening (58), which can be closed by the intermediate piston (46) acting in the manner of a slide, is formed axially between an annular end of the shielding element (30) and an inner housing step (56), which reduces the internal cross section between the annular gap (32), which forms the flow path, and the sealing surface (54).

8. Coupling part according to Claim 7, **characterized in that** the radial flow opening (58) merges into an axial annular passage (60), which for its part can be closed off by the valve body (14) interacting with a valve-sealing region (22) of the valve housing (12).

9. Coupling part according to one or more of Claims 1 to 8, **characterized in that** the valve body (14) has an end-side bearing surface, in such a manner that, by the plug-in movement occurring during coupling and by end-side contact with a mating plunger (28) of the other coupling part (4), it is displaced relative to the valve-sealing region (22) of the valve housing (12), counter to the force of a restoring spring (24), into an open position.

10. Coupling part according to Claim 9, **characterized in that** the valve body (14) or the valve stem (16) has a driving projection (62), in such a manner that, during its opening movement, beyond a certain intermediate position, it drives with it the intermediate piston (46), counter to the force of a closure spring (64), into its open position.

## Revendications

1. Partie de raccord (2) appartenant à un raccord à emmanchement pour fluides sous pression qui est composé de deux parties de raccord (2, 4) pouvant être emmanchées l'une dans l'autre et présentant des clapets qui s'ouvrent mutuellement dans ce mouvement, en particulier clapet mâle (2) côté récepteur de pression, pouvant être emmanché dans un clapet femelle (4) côté émetteur de pression, et comprenant un corps de clapet (14) qui est guidé mobile axialement dans le sens de l'emmanchement dans un boîtier de clapet (12) de manière à être placé automatiquement dans une position d'ouverture lors de l'accouplement, par appui contre l'autre partie de raccord (4), le corps de clapet (14) étant disposé à l'intérieur du boîtier de clapet (12) de façon à être protégé contre une sollicitation du fluide sous pression, de telle manière qu'à l'état fermé, il soit monté libre de forces dues à la pression qui agissent dans la direction axiale, le corps de clapet (14) étant guidé par une tige de clapet (16) s'étendant axialement en sens inverse de l'emmanchement, à joint étanche sur sa circonférence à l'intérieur d'un élément de protection (30) et l'espace situé à l'intérieur de l'élément de protection étant toujours sensiblement sans pression,
**caractérisée en ce que** le corps de clapet (14) est guidé indirectement dans l'élément de protection (16) par sa tige de clapet (16), par l'intermédiaire d'un piston intermédiaire annulaire (46) guidé mobile dans la direction axiale, le piston intermédiaire (46) étant monté à joint étanche par rapport à l'élément de protection (30) par l'intermédiaire d'une première garniture d'étanchéité (48) et par rapport à la tige de clapet (16) par l'intermédiaire d'une deuxième garniture d'étanchéité (50) et coopérant par ailleurs à joint étanche avec le boîtier de clapet (12) par l'intermédiaire d'une troisième garniture d'étanchéité (52) de manière à former un élément obturateur additionnel pour commander la voie d'écoulement du fluide sous pression.

2. Partie de raccord selon la revendication 1,
**caractérisée en ce que** l'espace situé à l'intérieur de l'élément de protection (30) est relié à l'atmosphère par au moins une ouverture de ventilation (34) du boîtier.

3. Partie de raccord selon la revendication 1 ou 2,
**caractérisée en ce que** l'élément de protection (30) en forme de douille et qui entoure coaxialement la tige de clapet (16) est appuyé en position fixe à l'intérieur du boîtier de clapet (12) par l'intermédiaire d'une partie de base (36), la partie de base (30) présentant au moins une ouverture de passage (40) qui relie l'espace (38) situé à l'intérieur de l'élément de protection (30) à l'ouverture de ventilation (34) du boîtier, ainsi qu'au moins une ouverture d'écoulement (42) pour le fluide sous pression.

4. Partie de raccord selon la revendication 3, **caractérisée en ce qu'**une fente annulaire (32) formée entre l'élément de protection (30) et le boîtier de clapet (12) forme une voie d'écoulement pour le fluide sous pression, la fente annulaire (32) étant reliée à un raccordement de fluide sous pression (8) par l'intermédiaire de l'au moins une ouverture d'écoulement (42) de la partie de base (36).

5. Partie de raccord selon une des revendications 1 à 4,
**caractérisée en ce que** la troisième garniture d'étanchéité (52) est constituée par une garniture d'étanchéité radiale par l'intermédiaire de laquelle le piston auxiliaire (46) coopère avec une surface d'étanchéité (54) sensiblement cylindrique du boîtier de clapet (12).

6. Partie de raccord selon une des revendications 1 à 4,
**caractérisée en ce que** le piston auxiliaire (46) présente une section extérieure sensiblement constante, de préférence sur toute sa longueur, de sorte que la surface d'étanchéité (54) du boîtier de clapet (12) qui coopère avec la troisième garniture d'étanchéité (52), d'une part, et la surface interne de l'élément de protection (30) qui coopère avec la première garniture d'étanchéité (48), d'autre part, présentent sensiblement la môme section intérieure.

7. Partie de raccord selon la revendication 5 ou 6,
**caractérisée en ce que**, dans une position axiale entre une extrémité frontale annulaire de l'élément de protection (30) et un épaulement intérieur (56) du boîtier qui réduit la section intérieure entre la fente annulaire (32) formant la voie d'écoulement et la surface d'étanchéité (54), est formée une ouverture d'écoulement radiale (58) qui peut être obturée par le piston intermédiaire (46) à la façon d'un tiroir.

8. Partie de raccord selon la revendication 7,
**caractérisée en ce que** l'ouverture d'écoulement radiale (58) débouche dans un canal annulaire axial (60) qui, de son côté, peut être obturé par le corps de clapet (14) qui coopère avec une région d'étanchéité de clapet (22) du boîtier de clapet (12).

9. Partie de raccord selon une ou plusieurs des revendications 1 à 8,
**caractérisée en ce que** le corps de clapet (14) présente une surface d'appui côté frontal de telle manière que, sous l'effet du mouvement d'emmanchement qui se produit lors de l'accouplement, et sous l'effet de l'application côté frontal contre un contre-poussoir (28) de l'autre partie de raccord (4), il soit repoussé dans une position d'ouverture dans un mouvement relatif par rapport à la région d'étanchéité de clapet (22) du boîtier de clapet (12), à l'encontre de la force d'un ressort de rappel (24).

10. Partie de raccord selon la revendication 9,
**caractérisée en ce que** le corps de clapet (14) ou la tige de clapet (16) présente un organe d'entraînement (62) de telle sorte qu'au cours de son mouvement d'ouverture, à partir d'une certaine position intermédiaire, il entraîne le piston intermédiaire (46) dans sa position d'ouverture à l'encontre de la force d'un ressort de fermeture (64),.
